# EUROPÄISCHE PATENTSCHRIFT

(11) **EP 1 790 069 B1**
(45) Veröffentlichungstag und Bekanntmachung des Hinweises auf die Patenterteilung: **11.03.2009**
(21) Anmeldenummer: 05789613.6
(22) Anmeldetag: 13.09.2005
(51) Int. Cl.: H02P 6/24, G05B 19/042, B41F 33/12

(54) **VERFAHREN ZUM ABSCHALTEN ZUMINDEST EINES REGELUNGSTEILS EINES STROMRICHTERGERÄTES**
METHOD FOR DEACTIVATING AT LEAST ONE CONTROL PART OF A SEMICONDUCTOR CONVERTER
PROCEDE POUR DECONNECTER AU MOINS UNE PARTIE DE REGULATION D'UN APPAREIL CONVERTISSEUR DE COURANT

(30) Priorität: 17.09.2004 DE 102004045197
(43) Veröffentlichungstag der Anmeldung: 30.05.2007
(73) Patentinhaber: SIEMENS AKTIENGESELLSCHAFT, 80333 München (DE)
(72) Erfinder: HEINEMANN, Gerhard, 91058 Erlangen (DE); KREBBER, Eckart, 91056 Erlangen (DE)
(86) Internationale Anmeldenummer: PCT/EP2005/054546
(87) Internationale Veröffentlichungsnummer: WO 2006/030008

(56) Entgegenhaltungen:
- EP-A- 1 203 664
- DE-A1- 4 325 038
- DE-A1- 10 024 636
- DE-U1- 8 701 165

## Beschreibung

Die Erfindung betrifft ein Verfahren zum Abschalten zumindest eines Regelungsteils eines Stromrichtergerätes bzw. ein entsprechendes Regelungsteil eines Stromrichtergerätes.

Ein Stromrichtergerät weist ein Regelungsteil und ein Stromrichterteil auf. Das Stromrichterteil weist Leistungshalbleiter-Bauelemente auf, welche zur Stromrichtung vorgesehen sind. Das Regelungsteil weist eine Regelungseinrichtung auf, welche zur Regelung des Stromrichters vorgesehen ist. Mit Hilfe des Regelungsteils ist auch ein elektrischer Motor, zum Beispiel eine Synchronmaschine, eine Asynchronmaschine, ein Torquemotor oder ein Linearmotor regelbar. Eine im Regelungsteil realisierbare Regelung weist beispielsweise einen Lageregler, einen Drehzahlregler, einen Geschwindigkeitsregler, einen Momentenregler, einen Stromregler und/oder dergleichen auf. Das Regelungsteil und das Stromrichterteil des Stromrichtergerätes sind beispielsweise in einem gemeinsamen Gehäuse oder auch in zwei unterschiedlichen Gehäusen untergebracht. Sind Regelungsteil und Stromrichter in einem Gehäuse untergebracht und sind die einzelnen Teile nicht mehr exakt voneinander trennbar, so wird unter einem Regelungsteil ein Stromrichtergerät verstanden, welches eine Regelungseinrichtung in Form eines Regelungsteils und einen Stromrichterteil aufweist.

Das Stromrichtergerät ist insbesondere z.B. in einem Handhabungsautomaten oder in einer Werkzeugmaschine oder einer Produktionsmaschine einsetzbar. Unter einer Werkzeugmaschine wird beispielsweise eine ein- oder mehrachsige Dreh-, Fräs-, Bohr- oder Schleifmaschine verstanden. Zu den Werkzeugmaschinen werden im Rahmen der vorliegenden Erfindung z.B. auch Bearbeitungszentren, lineare und rotatorische Transfermaschinen, Lasermaschinen oder Wälz- und Verzahnmaschinen gezählt.

Zu den Produktionsmaschinen werden im Rahmen der vorliegenden Erfindung z.B. Textil-, Kunststoff-, Holz-, Glas-, Keramik- oder Steinbearbeitungsmaschinen gezählt.

Regelungsteile von Stromrichtergeräten werden mit Hilfe von Mikrorechnern digital geregelt. Die für die Anpassung an jeweilige Anlage- bzw. Maschine benötigten Parameter werden in einem nichtflüchtigen Speicher abgelegt. Nach Eingabe einzelner Parameter oder nach Abschluss einer gesamten Inbetriebnahme eines Stromrichtergerätes werden die Parameter in einen nichtflüchtigen Speicher des Regelungsteils des Stromrichtergerätes übernommen. Des Weiteren gibt es beispielsweise unter Umständen noch weitere Schreibvorgänge auf den nichtflüchtigen Speicher, z.B. für das Abspeichern von Fehlermeldungen, von Logbucheinträgen von aufgenommenen Messwerten. Aufgenommene Messwerte sind beispielsweise in einer Trace-Datei speicherbar. Mit Fortschreiten der Komplexität des Stromrichtergerätes bzw. von dessen Regelungsteil wird die Anzahl dieser Daten immer größer.

Wenn während eines Schreibvorgangs auf einen nichtflüchtigen Speicher die Spannungsversorgung unterbrochen wird, kann sich daraus ein Datenverlust ergeben. Wird bei einem Stromrichtergerät beispielsweise die Spannungsversorgung abgeschaltet und wird in diesem Stromrichtergerät beispielsweise eine Kompakt-Flash-Karte als ein Speichermedium verwendet, so ist dies problematisch, da bei einer Kompakt-Flash-Karte das Schreibverhalten nicht genau spezifiziert ist. Dies bedeutet, dass die Zeitdauer bei der ein Schreibvorgang bzw. ein Schreibauftrag auf der Kompakt-Flash-Karte beendet ist, vorab nicht feststeht. Daher können bei einem Abschalten des Regelungsteils Datenverluste und Inkonsistenzen auftreten. Noch größere Probleme können entstehen, wenn die Daten, welche auf einem Speichermedium zu speichern sind, in Form eines Dateisystems abgelegt werden. Tritt beispielsweise ein Spannungsausfall während des Schreibens einer File-Allocation-Table (FAT) oder während des Schreibens eines Dateiverzeichnisses auf, so können Daten des Dateisystems zerstört werden, so dass der ganze Inhalt des Speichermediums unbrauchbar wird.

Nach dem Stand der Technik weisen Stromrichtergeräte beispielsweise eine Leuchtdiode auf, die die Schreibvorgänge auf den nichtflüchtigen Speicher anzeigt. Das Stromrichtergerät darf demnach erst dann ausgeschaltet werden, wenn die Leuchtdiode erloschen ist. Da Stromrichtergeräte vielerorts in einem Schaltschrank eingebaut sind, ist die Kontrolle über eine Leuchtdiode in der Regel nur während einer Inbetriebnahme möglich. Aus diesem Grunde wird es nach dem Stand der Technik vermieden, automatisch ablaufende Schreibvorgänge auf einen nichtflüchtigen Speicher des Stromrichtergerätes während des normalen Betriebes zuzulassen. Derartige Schreibvorgänge sind beispielsweise das Schreiben von Logbuch-Einträgen und/oder das Speichern von Messwerten in einen Trace bzw. in einer Trace-Datei. Nach dem Stand der Technik werden derartige Schreibvorgänge also soweit wie möglich vermieden, da im Falle eines Abschaltvorganges des Stromrichtergerätes mit einem Datenverlust zu rechnen ist.

Aus der DE 100 24 636 A1 ist ein Betriebsverfahren für ein Regelungsteil eines Stromrichtergeräts bekannt, wobei das Stromrichtergerät das Regelungsteil und ein Stromrichterteil aufweist. Im Falle eines Ausfalls einer elektrischen Energieversorgung des Regelungsteils werden noch Abschlussroutinen durchgeführt. Im Rahmen der Abschlussroutinen werden unter anderem Variable in einen nichtflüchtigen Speicher des Regelungsteils geschrieben.

Der DE 43 25 038 A1 ist ein ähnlicher Offenbarungsgehalt zu entnehmen.

Aus der EP 1 203 664 A2 ist ein Betriebsverfahren für eine speicherprogrammierbare Steuerung bekannt, bei welchem der speicherprogrammierbaren Steuerung eine Abschaltanforderung vorliegt. Das Vorliegen der Abschaltanforderung aktiviert ein Zeitglied. Nach Ablaufen des Zeitglieds wird die Stromversorgung von der speicherprogrammierbaren Steuerung getrennt. Vor dem Trennen beendet die speicherprogrammierbare Steuerung interne Vorgänge, z. B. das Überführen einer gesteuerten Einrichtung in einen sicheren Zustand.

Aufgabe der vorliegenden Erfindung ist es, ein Verfahren zum Abschalten zumindest eines Regelungsteils eines Stromrichtersanzugeben, welches die oben beschriebenen Nachteile, die bei einer Abschaltung des Regelungsteils auftreten können, zumindest reduziert.

Die Lösung der Aufgabe gelingt mittels eines Verfahrens nach Anspruch 1 und mittels eines Regelungsteils mit den Merkmalen nach Anspruch 4. Die abhängigen Ansprüche 2 und 3 sind erfinderische Ausgestaltungen des Verfahrens.

Bei einem Verfahren zum Abschalten zumindest eines Regelungsteils eines Stromrichtergerätes, wobei das Stromrichtergerät zumindest das Regelungsteil und der Stromrichterteil aufweist, liegt dem Regelungsteil eine Abschaltanforderung vor. Die Abschaltinformation wird beispielsweise intern im Regelungsteil erzeugt oder über ein Mittel zur Datenübertragung dem Regelungsteil übermittelt. Des Weiteren ist z.B. möglich, dass die Abschaltinformation über eine Maschinenschnittstelle wie z.B. einem Bediengerät von einem Anwender erzeugt wird und dem Regelungsteil zur Verarbeitung zur Verfügung gestellt wird. Liegt dem Regelungsteil die Abschaltinformation vor, so wird danach zumindest ein Datenverarbeitungsvorgang ausgeführt. Der Datenverarbeitungsvorgang dient insbesondere einer Datensicherung. Nach Abschluss des oder der Datenverarbeitungsvorgänge wird eine Abschaltbereitschaftsinformation erzeugt. Die Abschaltinformation wird beispielsweise intern im Stromrichtergerät oder auch intern im Regelungsteil derart verarbeitet, dass es zur Trennung des Regelungsteils von einer Spannungsquelle kommt. Die Spannungsquelle ist ein Beispiel für eine Stromversorgung. Eine weitere Möglichkeit der Verwendung der Abschaltinformation ist es, diese extern auszugeben, so dass diese außerhalb des Regelungsteils und/oder außerhalb des Stromrichtergerätes zur Abschaltung z.B. einer Stromversorgung des Regelungsteils führt.

Das Regelungsteil weist hierfür insbesondere zumindest einen Mikroprozessor zur Datenverarbeitung auf.

Mittels der Abschaltanforderung ist ein Abschaltvorgang initiierbar. Der Abschaltvorgang weist die Abarbeitung von Datenverarbeitungsvorgängen auf. Es ist also zumindest ein Datenverarbeitungsvorgang oder es sind also auch mehrere Datenverarbeitungsvorgänge ausführbar. Der Datenverarbeitungsvorgang ist beispielsweise vorab definiert. Mittels des Datenverarbeitungsvorganges ist beispielsweise ein Sichern von Dateien in einen nichtflüchtigen Speicher durchführbar. Weiterhin ist es möglich, mittels eines Datenverarbeitungsvorgangs beispielsweise Makros oder Programme auszuführen. Der Datenverarbeitungsvorgang ist beispielsweise als Datenverarbeitungsprogramm realisiert. Welches Makro bzw. welches Programm auszuführen ist, wird beispielsweise im Datenverarbeitungsprogramm vorab definiert. Ist ein Datenverarbeitungsprogramm bzw. sind alle Datenverarbeitungsprogramme, welche mittels der Abschaltanforderung gestartet sind, beendet, oder erfolgte die Beendigung insbesondere ohne Fehlermeldung, dann ist eine Abschaltbereitschaftsinformation erzeugbar. Die Abschaltbereitschaftsinformation ist beispielsweise eine Freigabe zur Durchführung des Abschaltens einer elektrischen Stromversorgung, welche insbesondere für die elektrische Stromversorgung des Regelungsteils vorgesehen ist.

Mittels des erfindungsgemäßen Verfahrens ist es also möglich, für ein Regelungsteil eines Stromrichtergerätes bzw. auch für ein Stromrichtergerät einen geordneten Ablauf des Abschaltvorganges, insbesondere der Elektronikstromversorgung des Regelungsteils, zu definieren. Die Elektronikstromversorgung ist als Stromversorgung insbesondere zur Versorgung eines Mikroprozessors und/oder einer Speichereinrichtung für digitale Daten vorgesehen. Das automatische Anstoßen von vorher definierten Makros oder Programmen ermöglicht dabei nicht nur das ordnungsgemäße Abspeichern von nichtflüchtigen Daten, sondern kann zum Beispiel auch dazu benutzt werden, um eine Maschinenmechanik in eine Parkposition zu fahren. Außerdem kann in dieser Phase eine überlagerte Steuerung oder eine Bedieneinheit über ein bevorstehendes Abschalten eines Antriebs informiert werden, so dass die überlagerte Steuerung ebenfalls entsprechende Abschaltmaßnahme durchführen kann, ohne dass z.B. Fehlermeldungen wie "Kommunikation mit dem Antrieb unterbrochen" generiert werden. Derartige Fehlermeldungen sind unterdrückbar. In einer vorteilhaften Ausgestaltung wird also die Abschaltanforderung an ein Regelungsteil an ein weiteres Regelungsteil und/oder eine Steuerung, insbesondere eine Steuerung einer Werkzeugmaschine bzw. einer Produktionsmaschine übermittelt.

Vorteilhafterweise erfolgt mittels der Abschaltbereitschaftsinformation eine Freigabe und/oder eine Initiierung einer elektrischen Trennung des Regelungsteils von einer elektrischen Stromversorgung. Die elektrische Stromversorgung ist zumindest zur Versorgung des Regelungsteils mit Energie vorgesehen. Die Freigabe ist dient beispielsweise dazu, ein Signal, welches das Ausschalten der Stromversorgung verhindert hat, zu unterdrücken oder auch zu unterbinden.

In weiteren vorteilhaften Ausgestaltungen der Erfindung ist die Abschaltanforderung in verschiedensten Weisen ausgeführt. Die Abschaltanforderung, welche ein Initiieren des Abschaltvorganges darstellt, kann beispielsweise wie folgt erfolgen:
- mittels des Schreibens eines azyklischen Steuerparameters, zum Beispiel über eine Feldbuskommunikation von einer überlagerten Steuerung oder einer Bedieneinheit;
- mittels eines zyklisch gelesenen Prozesssignals, das extern erzeugbar ist. Hierbei kann es sich beispielsweise um ein Steuerbit handeln, das von einer überlagerten Steuerung, zum Beispiel über einen Feldbus, übermittelt wird. Eine Übermittlung kann beispielsweise aber auch über ein Klemmensignal, zum Beispiel eine digitale 24 V-Eingangsklemme, erfolgen;
- mittels einer internen Auslösung, z.B. mittels eines auf dem Stromrichtergerät (kurz Stromrichter genannt) programmierten.Ablauf gemäß eines Anwenderprogrammes oder als Reaktion auf einen aufgetretenen Fehler.

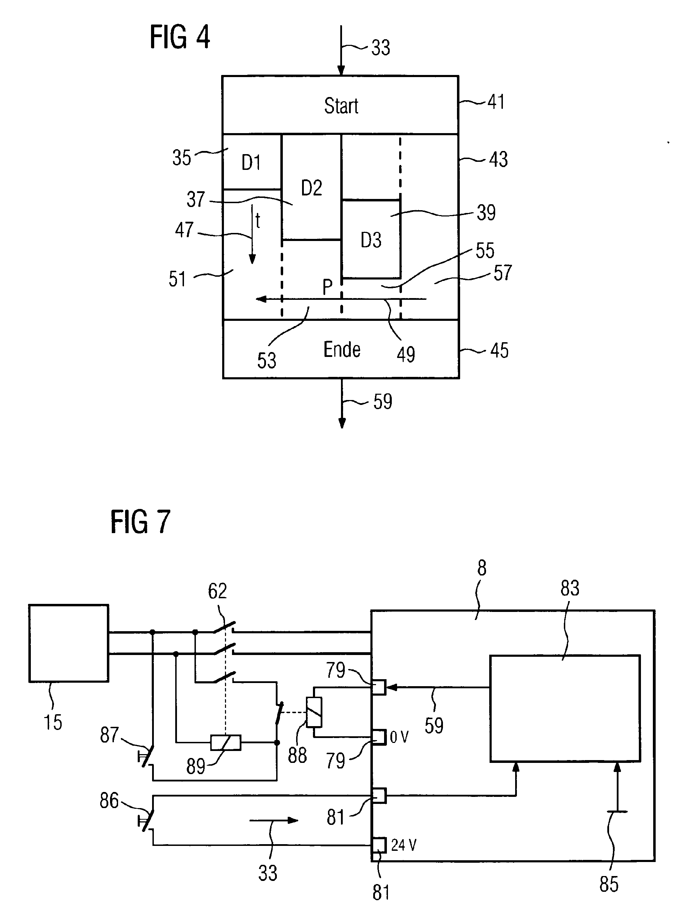

In einer weiteren vorteilhaften Ausgestaltung laufen Verarbeitungsvorgänge wie z.B. ein Makro und/oder ein Programm in unterschiedlichen zeitlichen Ablaufebenen des Regelungsteils ab. Dass ein Regelungsteil in seiner Software bzw. in seiner Runtime-Software unterschiedliche Ablaufebenen aufweist, ist nachfolgend insbesondere in den Figuren 4 bis 6 beschrieben. Abhängig von der Priorität des abzuarbeitenden Datenverarbeitungsvorganges sind dann verschiedenen Datenverarbeitungsvorgängen unterschiedliche Prioritäten zuordenbar, so dass manche Datenverarbeitungsvorgänge schneller ablaufen können als andere. Somit kann eine Priorisierung wichtiger Datenverarbeitungsvorgänge vor weniger wichtigen erfolgen und es ermöglicht werden, dass manche Datenverarbeitungsvorgänge schneller bearbeitet werden als andere.

In einer weiteren Ausführung des Verfahrens wird von einem Datenverarbeitungsverfahren zumindest eine der folgenden Funktionen durchgeführt:
- Sicherstellung eines Abschlusses eines laufenden Speichervorgangs auf einen nichtflüchtigen Speicher,
- Start und/oder Ausführung eines Schreibvorgangs, insbesondere auf einen nichtflüchtigen Speicher von Daten,
- Start und/oder Ausführung eines programmierten Makros,
- Start und/oder Ausführung eines Programms insbesondere zur Bewegungsführung,
- Start und/oder Ausführung eines Parametriervorgangs, welcher beispielsweise das Setzen eines Zählers betrifft.

Die Ausführung des Schreibvorgangs, des Makros, des Programms oder des Parametriervorgangs erfolgt vorteilhafterweise bis zum Ende des Schreibvorgangs, des Makros, des Programms oder des Parametriervorgangs.

Mittels eines Datenverarbeitungsvorgangs ist also ein zusätzliches Starten und komplettes Ausführen zusätzlicher Schreibvorgänge möglich. Dies wird beispielsweise dazu verwendet, dass Daten aus einem RAM-Speicher in einen nichtflüchtigen Speicher übertragen werden. Dieser erspart ständige, zyklische Schreibvorgänge der entsprechenden, veränderlichen Daten während des Betriebs des Stromrichtergerätes bzw. des Regelungsteils auf zumindest ein nichtflüchtiges Speichermedium, welches zumeist nur eine begrenzte Zahl von Schreibzyklen zulässt.

Betrifft ein Datenverarbeitungsprogramm ein zusätzliches Starten und/oder komplettes Ausführen eines von einem Anwender definierten Parametermakros, so wird hierdurch deutlich, dass hierüber eine flexible, vom Anwender definierbare Reaktion auf einem Abschaltvorgang vor dem Abschalten ermöglicht wird.

Mittels eines zusätzlichen Startens bzw. kompletten Ausführens von Anwenderprogrammen, wie zum Beispiel einem Anwenderprogramm für ein spezielles Positionierprogramm, welches ein bewegliches Maschinenteil in eine definierte Parkposition fährt, wird ein Datenverarbeitungsprogramm mit einer Funktion ausgestattet, welche es ermöglicht, eine Maschine vor Abschalten des Regelungsteils in definierte Positionen zu fahren, um Schäden an der Maschine durch das Abschalten der Regelung zu vermeiden.

In weiteren vorteilhaften Ausgestaltungen des Verfahrens ist die Abschaltbereitschaftsinformation in verschiedensten Weisen zu nutzen bzw. auszugestalten. Die Abschaltbereitschaftsinformation betrifft beispielsweise ein Setzen eines azyklischen Leseparameters auf einen Wert, der anzeigt, dass das Stromrichtergerät bzw. das Regelungsteil abschaltbereit ist. Dieser Leseparameter kann zum Beispiel von einer überlagerten Steuerungs- oder Bedieneinheit ausgelesen werden, die daraufhin den eigentlichen elektrischen Abschaltvorgang, zum Beispiel durch ein Schaltschütz auslöst. Die Abschaltbereitschaftsinformation kann in einer weiteren Ausgestaltung mittels eines Klemmsignals nach außen signalisiert werden. Das Regelungsteil und/oder das Stromrichtergerät weisen hierfür z.B. eine Klemme auf. Das Klemmsignal kann zum Beispiel auf eine 24 V-Ausgangsklemme gelegt werden, welche direkt eine Schützschaltung ansteuert, wobei die Schützschaltung zum Ein- und Ausschalten der Stromversorgung für zumindest das Regelungsteil vorgesehen ist. Alternativ oder in Kombination kann das Klemmsignal auch über ein Kontrollbit in Prozessdaten einer Feldbuskommunikation übertragen werden. Für den Fall, dass das Stromrichtergerät eine interne elektrische Abschaltvorrichtung wie zum Beispiel ein Schütz für die elektrische Stromversorgung des Regelungsteils bzw. der Elektronik des Regelungsteils aufweist und die Abschaltvorrichtung in den Stromrichter-direkt integriert ist, kann diese auch direkt angesteuert werden.

Mittels der Erfindung ist folglich ein Abschaltmechanismus für eine Elektronikstromversorgung eines Regelungsteils ausgebildet. Es sind Abläufe wie zum Beispiel Handshaking über Parameter oder Prozesssignale für einen automatisierbaren Ablauf des Shutdown-Mechanismus (also dem Mechanismus zum Abschalten des Regelungsteils) nutzbar. Vorteilhafterweise ist ein Umfang der während des Shutdowns (Abschaltens) ablaufenden Vorgänge, insbesondere der Datenverarbeitungsvorgänge, vom Anwender parametrierbar bzw. programmierbar. Die während des Shutdowns ablaufenden Vorgänge, insbesondere Datenverarbeitungsvorgänge, können von einem Anwender projektierte Parameter-Makros oder Programme enthalten.

Die verschiedenen erfindungsgemäßen Verfahren sind bei einem Regelungsteil eines Stromrichtergerätes anwendbar, so dass die Erfindung entsprechend auch ein derartiges Regelungsteil betrifft. Dieses Regelungsteil weist die oben beschriebenen Merkmale der Erfindung auf.

Ausführungsbeispiele der Erfindung sind in der Zeichnung dargestellt und werden im Folgenden näher erläutert. Dabei zeigt:
- FIG 1: ein erstes Stromrichtergerät,
- FIG 2: ein zweites Stromrichtergerät,
- FIG 3: ein drittes Stromrichtergerät,
- FIG 4: einen Verfahrensablauf,
- FIG 5: Ablaufsebene einer klassischen speicherprogrammierbaren Steuerung SPS,
- FIG 6: Ablaufsebene einer Bewegungssteuerung und
- FIG 7: einen elektrischen Anschluss für das Stromrichtergerät.

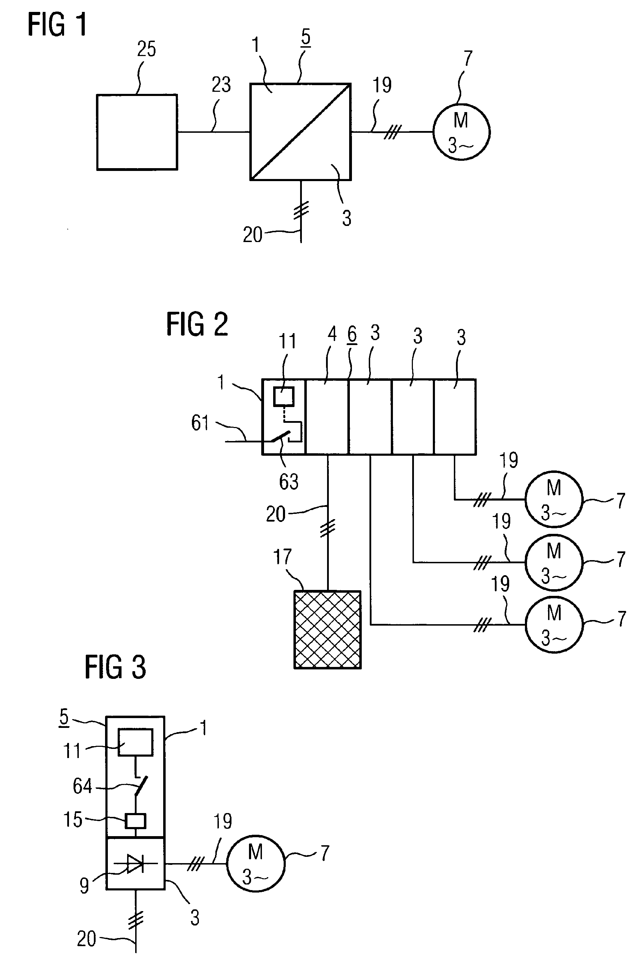

Die Darstellung gemäß FIG 1 zeigt ein Stromrichtergerät 5. Das Stromrichtergerät 5 weist ein Regelungsteil 1 und ein Stromrichterteil 3 auf. Über eine Datenverbindung 23 ist das Stromrichtergerät 5 mit einer speicherprogrammierbaren Steuerung (SPS) 25 datentechnisch verbunden. Das Stromrichterteil 3 weist Leistungshalbleiter auf, welche in FIG 1 nicht dargestellt sind. Die Energieversorgung des Stromrichterteils 3 erfolgt mittels eines elektrischen Leistungsanschlusses 20. Das Stromrichterteil 3 ist beispielsweise ein Umrichter. Der Umrichter ermöglicht beispielsweise die Umrichtung einer dreiphasigen Wechselspannung in eine dreiphasige Wechselspannung variabler Frequenz. Mit einer dreiphasigen Wechselspannung variabler Frequenz ist beispielsweise eine elektrische Maschine 7 antreibbar. Die elektrische Maschine 7 ist über einen elektrischen Leistungsanschluss 19 mit dem Stromrichterteil 3 verbunden.

Die Darstellung gemäß FIG 2 zeigt ein Stromrichtergerät 6, welches ein Regelungsteil 1 und vier Stromrichterteile 3, 4 aufweist, wobei die Stromrichterteile 3 zur Speisung elektrischer Maschinen 7 vorgesehen sind und das Stromrichterteil 4 zur Gleichrichtung einer dreiphasigen Wechselspannung, welche über den elektrischen Leistungsanschluss 20 eingespeist werden kann, vorgesehen ist. Die elektrische Energie wird von einer Stromversorgung bzw. ein Stromversorgungsnetz 17 geliefert. Das Regelungsteil 1 ist mittels einer separaten Stromversorgung 61 mit Strom versorgt. Ein Schalter 63 ist vorgesehen, um eine Elektronik 11 für das Regelungsteil 1 von der separaten Stromversorgung 61 zu trennen. Die Darstellung gemäß FIG 1 zeigt demgegenüber ein Regelungsteil 1, welches seine Stromversorgung aus dem elektrischen Leistungsanschluss 20 gewinnt.

Die Darstellung gemäß FIG 2 zeigt, dass ein Stromrichtergerät 6 nicht nur aus einem Geräteteil, das heißt aus einem Gerät mit nur einem Gehäuse bestehen kann, sondern dass dieses Stromrichtergerät 6 auch aus Teilen bestehen kann, welche jeweils ein separates Gehäuse aufweisen. Die Stromrichterteile 3 und 4 sind ebenso wie das Regelungsteil 1 separat in einem Gehäuse angeordnet. Die Gehäuse sind beispielsweise nebeneinander in einem Rahmen oder in einem Schaltschrank angeordnet.

Die Darstellung gemäß FIG 3 zeigt ein Stromrichtergerät 5, wobei dieses Stromrichtergerät 5 ein Regelungsteil 1 und ein Stromrichterteil 3 aufweist. Das Stromrichterteil 3 weist Leistungshalbleiter 9 auf, wovon einer symbolisch dargestellt ist. Das Regelungsteil 1 weist eine Elektronik 11 auf, wobei die Elektronik 11 über eine Elektronikstromversorgung 15 versorgbar ist. Die Elektronik 11 des Regelungsteils 1 ist mittels eines Schalters 64 von dieser Stromversorgung 15 trennbar.

Die Darstellung gemäß FIG 4 zeigt einen verfahrensgemäßen Ablauf eines Abschaltvorgangs, wobei eine Abschaltanforderung 33 einen Start 41 von Datenverarbeitungsvorgängen 35, 37, 39 initiiert. Die Datenverarbeitungsvorgänge D1 35, D2 37 und D3 39 werden zu unterschiedlichen Zeitpunkten gestartet. Die unterschiedlichen Startzeitpunkte über einen Zeitverlauf 47 werden durch die unterschiedliche Positionierung eines Blocks, von dem die Datenverarbeitungsvorgänge D1 35, D2 37 und D3 39 dargestellt sind, angezeigt. In einem Abarbeitungsblock 43 werden also die Datenverarbeitungsvorgänge D1 35, D2 37 und D3 39 verarbeitet. Weist das Regelungsteil 1 bzw. die Software, welche auf diesem Regelungsteil 1 abläuft, verschiedene Ablaufsebenen 51, 53, 55, 57 auf, so sind in diese gemäß einer vorgegebenen Priorität P 49 unterteilt. Datenverarbeitungsvorgänge 35, 37, 39 sind gemäß FIG 4 jeweils einer Ablaufebene 51, 53, 55, 57 zugeordnet. Nicht dargestellt ist, dass zumindest zwei Datenverarbeitungsvorgänge einer Ablaufebene 51, 53, 55, 57 zugeordnet sind. Nach der Abarbeitung der Datenverarbeitungsvorgänge D1 35, D2 37 und D3 39 erfolgt am Ende 45 die Ausgabe einer Abschaltbereitschaftsinformation 59.

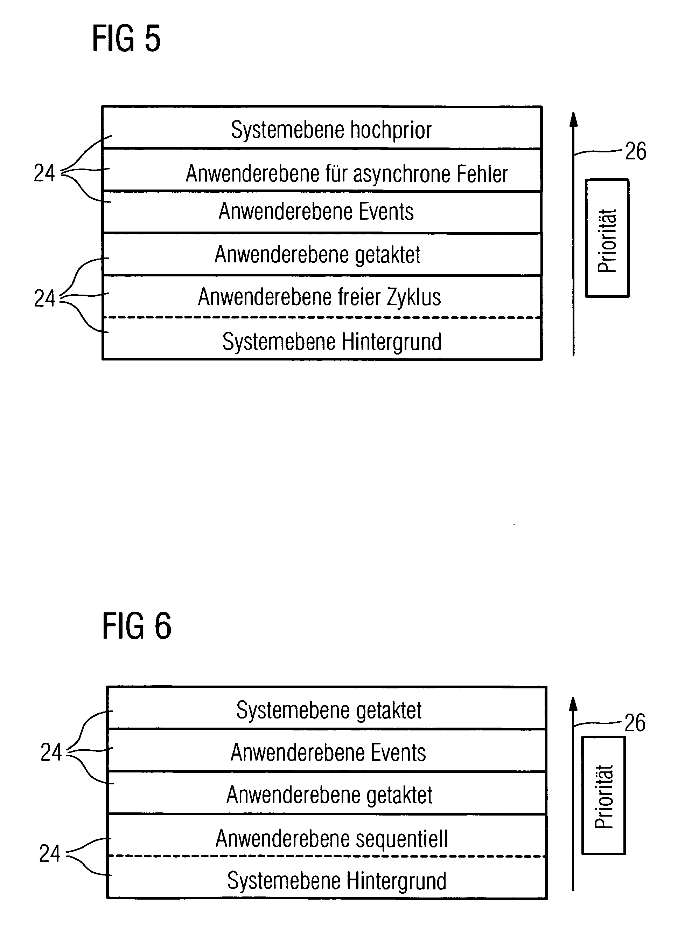

In der Darstellung gemäß FIG 5 sind die wesentlichen Ablaufebenen 24 einer klassischen speicherprogrammierbaren Steuerung, angeordnet nach ihrer Priorität, gezeigt. Derartige Abläufebenen 24 sind beispielsweise auch in einem Regelungsteil 1 realisiert. Der Prioritätsanstieg ist durch einen Pfeil 26 symbolisiert. In einer niederpriorsten Ebene, welche eine Ablaufebene 24 ist, werden, wie durch eine gestrichelte Linie angedeutet, zwei unterschiedliche Aufgaben, nämlich ein freier Zyklus, d.h. "Anwenderebene freier Zyklus", und eine Hintergrund-Systemebene, d.h. "Systemebene Hintergrund", im Round-Robin-Verfahren, also zeitscheibengesteuert, abgewickelt. Der Hintergrund-Systemebene sind z.B. Kommunikationsaufgaben zugeordnet. Bei einer folgenden getakteten Anwenderebene 24, bezeichnet als "Anwenderebene getaktet", ist der Aufruftakt der Tasks bzw. der Programme dieser Ebene parametrierbar. Es erfolgt eine Überwachung dahingehend, ob die Bearbeitung eines Anwenderprogrammes dieser getakteten Ebene 24 rechtzeitig abgeschlossen ist, bevor das Startereignis erneut auftritt. Läuft die Taktzeit ab, ohne dass das Anwenderprogramm der zugeordneten Ebene fertig abgearbeitet ist, wird eine entsprechende Task einer prioritätsmäßig übernächsten "Anwenderebene für asynchrone Fehler" gestartet. In dieser "Anwenderebene für asynchrone Fehler" kann der Anwender die Behandlung von Fehlerzuständen ausprogrammieren. Das Anwenderprogramm ist eine Software, welche für den Betrieb der Steuerungseinrichtung, aber auch der Regelungseinrichtung 1 vorgesehen ist.

Auf die "Anwenderebene getaktet" folgt eine "Anwenderebene Events". Die Reaktion auf externe oder interne Ereignisse (Events) erfolgt innerhalb der "Anwenderebene Events". Ein typisches Beispiel für ein solches Ereignis ist das Überschreiten eines Grenzwerts. In einer "Systemebene hochprior" liegen Aufgaben des Betriebssystems, welche die Arbeitsweise der speicherprogrammierbaren Steuerung sicherstellen.

Die Darstellung gemäß FIG 6 zeigt die wesentlichen Ablaufebenen 24 einer Bewegungssteuerung wie einer NC-Einrichtung oder auch eine CNC-Einrichtung. Auch hierbei sind die einzelnen Ebenen nach ihrer Priorität hierarchisch, wie durch einen Pfeil 26 symbolisiert, angeordnet. Auch dieses Modell von Ablaufebenen ist beispielsweise in einem Regelungsteil eines Stromrichtergerätes realisierbar. Eine "Systemebene Hintergrund" und eine "Anwenderebene sequenziell" haben eine gleiche Priorität, nämlich die niedrigste. Diese aufgabenmäßige Zusammengehörigkeit ist wie bei FIG 5 durch eine gestrichelte Linie symbolisiert. Die Tasks der "Anwenderebene sequenziell" werden zusammen mit den Tasks der "Systemebene Hintergrund" im Round-Robin-Verfahren abgearbeitet. Typische Tasks der "Systemebene Hintergrund" sind z.B. solche für Kommunikationsaufgaben. In der "Anwenderebene sequenziell" laufen die vom Anwender programmierten Programmteile für die eigentliche Steuerungsaufgabe. Stößt die Steuerung in einem dieser Programmteile auf einen Bewegungs- oder Positionierbefehl, wird ein Suspend gesetzt, d.h. das Anwenderprogramm wird an dieser Stelle unterbrochen. Die Abarbeitung dieses Bewegungs- oder Positionierbefehls geschieht in einer höchstprioren "Systemebene getaktet". Ein jeder Lageregler, der in der "Systemebene getaktet" abläuft, führt diesen Bewegungs- bzw. Positionierbefehl aus. Nach Ausführung des Befehls wird in die "Anwenderebene sequenziell" zurückgesprungen und das durch Suspend unterbrochene Anwenderprogramm durch ein Resume an der gleichen Stelle fortgesetzt. Die "Systemebene getaktet" enthält neben den schon erwähnten Lagereglern auch den Interpolationsteil der Steuerung.

Die Darstellung gemäß FIG 7 zeigt ein Ausführungsbeispiel in dem das erfindungsgemäße Verfahren über ein Schütz 88 eine Elektronikstromversorgung 15 automatisch abschaltet. Die Darstellung zeigt ein Stromrichtergerät 8, welches eine Ausgangsklemme 79 und eine Eingangsklemme 81 aufweist. In dem Stromrichtergerät 8 ist ein Shutdown-Mechanismus (Abschaltmechanismus) 83 programmiert, wobei mittels des Shutdown-Mechanismus 83 Parameter 85 sicherbar sind. Das Stromrichterteil des Stromrichtergerätes 8 ist in der Darstellung gemäß FIG 7 nicht dargestellt. Mittels einer Taste 86, welche beispielsweise mit "Aus" beschriftet ist, ist eine Abschaltanforderung 33 an das Stromrichtergerät 8 richtbar. Die Abschaltanforderung 33 löst den Shutdown-Mechanismus aus. Durch den Shutdown-Mechanismus wird zumindest ein Datenverarbeitungsprogramm gestartet. Das Datenverarbeitungsprogramm ist beispielsweise zu Sicherung der Parameter 85 vorgesehen. Nach erfolgter Durchführung des Datenverarbeitungsprogrammes wird eine Abschaltbereitschaftsinformation 59 auf die Ausgangsklemme 79 gelegt. Mittels eines Schützes 88 wird nun ein Schalter 62 bei Anliegen der Abschaltbereitschaftsinformation 59 geöffnet.

Weiterhin ist beispielsweise eine Taste 87 vorgesehen, welcher ein Schließen des Schalters 62 mittels des Schützes 89 ermöglicht. Das Schütz 89 und seine Ansteuerung können auch in das Stromrichtergerät 8 integriert sein, jedoch ist dies in der FIG 7 nicht dargestellt. Alternativ kann auch das Schütz 89 von einer überlagerten Steuerung oder von einem Bediengerät angesteuert werden, das mit dem Stromrichtergerät 8 über einen Feldbus kommuniziert. Auch dies ist in der Darstellung gemäß FIG 7 nicht dargestellt.

## Patentansprüche

1. Verfahren zum Trennen eines Regelungsteils (1) eines Stromrichtergerätes (5) von einer elektrischen Stromversorgung (15),
- wobei das Stromrichtergerät (5) das Regelungsteil (1) und ein Stromrichterteil (3) aufweist,
- wobei dem Regelungsteil (1) eine Abschaltanforderung (33) vorliegt,
- wobei das Regelungsteil (1) aufgrund der Abschaltanforderung (33) mindestens einen Datenverarbeitungsvorgang (35, 37, 39) ausführt,
- wobei das Regelungsteil (1) nach dem Beenden des mindestens einen Datenverarbeitungsvorgangs (35, 37, 39) eine Abschaltbereitschaftsinformation (59) erzeugt,
- wobei die Abschaltbereitschaftsinformation (59) das Trennen des Regelungsteils (1) von der elektrischen Stromversorgung (15) bewirkt.

2. Verfahren nach Anspruch 1,
**dadurch gekennzeichnet,**
**dass** die Datenverarbeitungsvorgänge (35, 37, 39) in unterschiedlichen zeitlichen Ablaufebenen (51, 53, 55, 57) des Regelungsteils (1) ablaufen.

3. Verfahren nach Anspruch 1 oder 2,
**dadurch gekennzeichnet,**
**dass** mindestens einer der Datenverarbeitungsvorgänge (35, 37, 39) zumindest eine der folgenden Funktionen durchführt:
- Sicherstellung eines Abschlusses eines laufenden Schreibvorganges auf einen nichtflüchtigen Speicher,
- Start und/oder Ausführung eines Schreibvorganges,
- Start und/oder Ausführung eines programmierten Makros,
- Start und/oder Ausführung eines Programms, insbesondere zur Bewegungsführung, und
- Start und/oder Ausführung eines Parametriervorgangs.

4. Regelungsteil (1) eines Stromrichtergerätes (5), wobei das Stromrichtergerät (5) das Regelungsteil (1) und ein Stromrichterteil (3) aufweist, **dadurch gekennzeichnet dass** das Regelungsteil (1)
- Mittel zum Empfangen einer Abschaltanforderung (33) aufweist,
- Mittel zum Ausführen mindestens eines Datenverarbeitungsvorgangs (35, 37, 39) aufgrund der Abschaltanforderung (33) aufweist,
- Mittel zum Erzeugen einer Abschaltbereitschaftsinformation (59) nach dem Beenden des mindestens einen Datenverarbeitungsvorgangs (35, 37, 39) aufweist,
- Mittel zum Trennen des Regelungsteils (1) von einer elektrischen Stromversorgung (15) aufgrund der Abschaltbereitschaftsinformation (59) aufweist.

## Claims

1. Method for disconnecting a control part (1) of a converter device (5) from an electrical power supply (15),
- with the converter device (5) having the control part (1) and a converter part (3),
- with a deactivation request (33) being made to the control part (1),
- with the control part (1) executing at least one data-processing operation (35, 37, 39) on the basis of the deactivation request (33),
- with the control part (1) generating an item of information (59) relating to readiness for deactivation after the at least one data-processing operation (35, 37, 39) is terminated, and
- with the item of information (59) relating to readiness for deactivation inducing disconnection of the control part (1) from the electrical power supply (15).

2. Method according to Claim 1, **characterized in that** the data-processing operations (35, 37, 39) run in different time execution levels (51, 53, 55, 57) of the control part (1).

3. Method according to Claim 1 or 2, **characterized in that** at least one of the data-processing operations (35, 37, 39) carries out at least one of the following functions:
- ensuring termination of a running write operation to a non-volatile memory,
- starting and/or executing a write operation,
- starting and/or executing a programmed macro,
- starting and or executing a program, particularly for movement control, and
- starting and/or executing a parameterization operation.

4. Control part (1) of a converter device (5), with the converter device (5) having the control part (1) and a converter part (3), **characterized in that** the control part (1)
- has means for receiving a deactivation request (33),
- has means for executing at least one data-processing operation (35, 37, 39) on the basis of the deactivation request (33),
- has means for generating an item of information (59) relating to readiness for deactivation after the at least one data-processing operation (35, 37, 39) is terminated, and
- has means for disconnecting the control part (1) from an electrical power supply (15) on the basis of the item of information (59) relating to readiness for deactivation.

## Revendications

1. Procédé pour séparer d'une alimentation (15) en courant électrique une partie (1) de régulation d'un appareil (5) convertisseur de courant,
- dans lequel l'appareil (5) convertisseur de courant a la partie (1) de régulation et une partie (3) de convertisseur de courant,
- dans lequel il est imposé à la partie (1) de régulation une exigence (33) de coupure,
- dans lequel la partie (1) de régulation réalise en raison de l'exigence (33) de coupure au moins une opération (35,37,39) informatique,
- dans lequel la partie (1) de régulation produit, après l'achèvement de la au moins une opération (35,37,39) informatique, une information (59) suivant laquelle elle est prête à la coupure,
- dans lequel l'information (59) suivant laquelle la partie (1) de régulation est prête à la coupure provoque la séparation de la partie (1) de régulation de l'alimentation (15) en courant électrique.

2. Procédé suivant la revendication 1,
**caractérisé en ce que** les opérations (35,37,39) informatiques se déroulent dans des plans (51,53,55,57) temporels de déroulements différents de la partie de régulation.

3. Procédé suivant la revendication 1 ou 2,
**caractérisé en ce qu'**au moins l'une des opérations (35,37,39) informatiques effectuent au moins l'une des fonctions suivantes :
- s'assurer de la fin d'une opération d'écriture en cours sur une mémoire non volatile,
- lancer/ou réaliser une opération d'écriture,
- lancer/ou réaliser une macro programmée,
- lancer/ou réaliser un programme, notamment pour guider un mouvement,
- lancer/ou réaliser un processus de paramétrage.

4. Partie (1) de régulation d'un appareil (5) convertisseur de courant, dans laquelle l'appareil (5) convertisseur de courant a la partie (1) de régulation et une partie (3) de convertisseur de courant, **caractérisée en ce que** la partie (1) de régulation
- a un moyen de réception d'une exigence (33) de coupure,
- a un moyen de réalisation d'au moins une opération (35,37,39) informatique sur la base de l'exigence (33) de coupure,
- a un moyen de production d'une information (59) suivant laquelle la partie (1) de régulation est prête à la coupure après l'achèvement de la au moins une opération (35,37,39) informatique,
- a un moyen de séparation de la partie (1) de régulation d'une alimentation (15) en courant électrique sur la base de l'information (59) suivant laquelle la partie (1) de régulation est prête à la coupure.
